(19)

Europäisches
Patentamt
European
Patent Office
Office européen
des brevets

(11)　**EP 4 250 420 A1**

(12)　　　　　　　　**EUROPEAN PATENT APPLICATION**

(43) Date of publication:
**27.09.2023　Bulletin 2023/39**

(21) Application number: **23162747.2**

(22) Date of filing: **17.03.2023**

(51) International Patent Classification (IPC):
***H01M 10/052*** (2010.01)　　***H01M 10/056*** (2010.01)
***H01M 4/04*** (2006.01)　　　***H01M 4/1391*** (2010.01)
***H01M 4/131*** (2010.01)　　***H01M 4/505*** (2010.01)
***H01M 4/52*** (2010.01)　　　***H01M 4/62*** (2006.01)
***H01M 4/02*** (2006.01)

(52) Cooperative Patent Classification (CPC):
**H01M 10/052; H01M 4/0404; H01M 4/131;
H01M 4/1391; H01M 4/523; H01M 4/62;
H01M 10/056; H01M 2004/028; H01M 2300/0071**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.03.2022　KR 20220034505**

(71) Applicant: **SK On Co., Ltd.
Seoul 03161 (KR)**

(72) Inventors:
• **LEE, Jong Hyuk
　Daejeon 34124 (KR)**

• **LEE, Sang Han
　Daejeon 34124 (KR)**
• **KIM, Jung Hwan
　Daejeon 34124 (KR)**
• **CHO, In Haeng
　Daejeon 34124 (KR)**
• **HA, Dong Wook
　Daejeon 34124 (KR)**

(74) Representative: **Stolmár & Partner
Patentanwälte PartG mbB
Blumenstraße 17
80331 München (DE)**

(54)　**CATHODE COMPOSITION FOR LITHIUM SECONDARY BATTERY AND LITHIUM SECONDARY BATTERY MANUFACTURED USING THE SAME**

(57)　　A cathode composition for a lithium secondary battery is provided. The cathode composition for a lithium secondary battery according to embodiments of the present invention includes a cathode active material including cathode active material particles having a single particle shape, flake graphite, and a conductive material including an amorphous carbon-based conductive material. Thereby, energy density and life-span properties of the lithium secondary battery may be improved.

EP 4 250 420 A1

**Description**

BACKGROUND

1. Field

The present invention relates to a cathode composition for a lithium secondary battery. More particularly, the present invention relates to a cathode composition including a lithium metal oxide-based cathode active material for a lithium secondary battery, and a lithium secondary battery manufactured using the same.

2. Description of the Related Art

A secondary battery is a battery which can be repeatedly charged and discharged. With rapid progress of information and communication, and display industries, the secondary battery has been widely applied to various portable telecommunication electronic devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

The lithium secondary battery may include: an electrode assembly including a cathode, an anode, and a separation membrane (separator); and an electrolyte in which the electrode assembly is impregnated. In addition, the lithium secondary battery may further include, for example, a pouch-shaped outer case in which the electrode assembly and the electrolyte are housed.

In the lithium secondary battery, a lithium metal oxide is used as a cathode active material, and it is preferable to have a high capacity, a high output, and high life-span properties. However, when using a cathode active material having a high nickel content for the high capacity and high output properties, it may be difficult to implement desired life-span properties. In addition, when using a cathode active material in a form of single particles for imparting high life-span properties to the battery, cracks may occur during pressing, thus life-span properties may be reduced.

For example, Korean Patent Publication Laid-Open No. 10-2017-0093085 discloses a cathode active material including a transition metal compound and an ion adsorbing binder, but there is a limitation in securing sufficient capacity properties, output properties and life-span properties.

SUMMARY

According to an aspect of the present invention, there is provided a cathode composition for a lithium secondary battery having improved stability and electrochemical properties.

According to an aspect of the present invention, there is provided a lithium secondary battery manufactured using the cathode composition having improved stability and electrochemical properties.

A cathode composition for a lithium secondary battery includes a cathode active material which includes cathode active material particles having a single particle shape; flake graphite; and a conductive material which includes an amorphous carbon-based conductive material.

In some embodiments, a content of the cathode active material particles having a single particle shape may be 10% by weight to 50% by weight based on a total weight of the cathode active material.

In some embodiments, the single particle shape includes a monolithic form in which 2 to 10 single particles are attached or adhered to each other.

In some embodiments, the cathode active material particles may have a composition represented by Formula 1 below.

$$[\text{Formula 1}] \qquad Li_aNi_xM_{1-x}O_{2+y}$$

In Formula 1, $0.9 \leq a \leq 1.2$. $0.5 \leq x \leq 0.99$, and $-0.1 \leq y \leq 0.1$, respectively, and M is at least one element selected from Na, Mg, Ca, Y, Ti, Hf, V, Nb, Ta, Cr, Mo, W, Mn, Co, Fe, Cu, Ag, Zn, B, Al, Ga, C, Si, Sn, Ba or Zr.

In some embodiments, x may be in a range of $0.8 \leq x \leq 0.95$ in Formula 1.

In some embodiments, the flake graphite may have an average particle diameter (D50) of 1 $\mu$m to 5 $\mu$m.

In some embodiments, the flake graphite may have a thickness of 0.1 $\mu$m to 1.5 $\mu$m.

In some embodiments, a content of the flake graphite may be 1% to 5% by weight based on a total weight of the cathode composition for a lithium secondary battery.

In some embodiments, a peak intensity ratio of the flake graphite of Raman spectrum, which is defined by Equation 1 below, may be 0.1 to 0.35:

$$[\text{Equation 1}]$$

$$\text{Peak intensity ratio of Raman spectrum} = I_D/I_G$$

In Equation 1, $I_D$ is a peak intensity of the flake graphite in a wavenumber range of $1,335 \text{ cm}^{-1}$ to $1,365 \text{ cm}^{-1}$ of Raman spectrum, and $I_G$ is a peak intensity of the flake graphite in a wavenumber range of $1,565 \text{ cm}^{-1}$ to $1,600 \text{ cm}^{-1}$ of Raman spectrum.

In some embodiments, the peak intensity ratio of Raman spectrum may be 0.2 to 0.3.

In some embodiments, the flake graphite may include at least one of natural graphite, artificial graphite and graphene.

In some embodiments, the conductive material may include at least one selected from the group consisting of graphite, carbon black, graphene, carbon fiber and carbon nanotube.

In some embodiments, the conductive material may further include a metal-based conductive material.

In some embodiments, the metal-based conductive material may include at least one selected from the group consisting of tin, tin oxide, titanium oxide, $LaSrCoO_3$ and $LaSrMnO_3$.

According to another aspect of the present invention, there is provided a lithium secondary battery includes a cathode which includes a cathode current collector, and is formed by coating at least one surface of the cathode current collector with the cathode composition for a lithium secondary battery according to exemplary embodiments; and an anode disposed to face the cathode.

According to another aspect of the present invention, there is provide a cathode composition for a lithium secondary battery comprising a cathode active material composition which comprises cathode active material particles, flake graphite dispersed with cathode active material particles, and a conductive material dispersed with cathode active material particles, and wherein the cathode active material particles comprise a monolith composed of only 2 to 10 particles attached or adhered to each other.

In some embodiments, a flake graphite content in the cathode active material composition is set to a weight percentage that reduces cracking in the cathode active material particles upon and after application to a cathode.

In some embodiments, the weight percentage of the flake graphite content ranges from 1% by weight to 5% by weight based on a total weight of the cathode composition.

In some embodiments, the conductive material comprises at least one material selected from the group of graphene, carbon nanotubes and carbon nanofibers to mechanically reinforce the cathode active material.

According to another aspect of the present invention, there is provide a lithium secondary battery comprising a cathode which comprises a cathode current collector, the cathode formed by coating at least one surface of the cathode current collector with the cathode composition for a lithium secondary battery, and an anode disposed to face the cathode, wherein the cathode has a cycle capacity retention rate measured at 45 °C for 500 cycles is greater than 90%.

The cathode composition according to embodiments of the present invention may include a cathode active material which includes cathode active material particles having a single particle shape; a conductive material; and flake graphite added separately therefrom. Thereby, flake graphite may be disposed around the cathode active material particles to relieve external pressure and stress applied to the cathode active material particles. Accordingly, mechanical stability of the cathode active material may be enhanced, and high-temperature storage properties and life-span properties may be improved.

BRIEF DESCRIPTION OF THE DRAWINGS

FIG. 1 is a scanning electron microscopy (SEM) image illustrating a cathode composition according to exemplary embodiments.

FIG. 2 is an SEM image illustrating flake graphite included in the cathode composition according to exemplary embodiments.

FIGS. 3 and 4 are a schematic plan view and a cross-sectional view of a lithium secondary battery according to exemplary embodiments, respectively.

DETAILED DESCRIPTION OF THE EMBODIMENTS

Embodiments of the present invention provide a cathode composition for a lithium secondary battery and a lithium secondary battery manufactured using the same.

Hereinafter, exemplary embodiments of the present invention will be described in detail with reference to the accompanying drawings. However, these embodiments are merely an example, and the present invention is not limited to the specific embodiments described as the example.

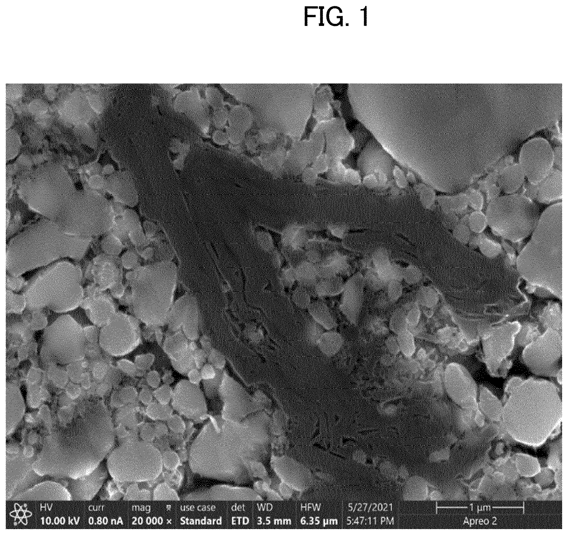

FIG. 1 is a scanning electron microscopy (SEM) image illustrating a cathode composition according to exemplary embodiments.

Referring to FIG. 1, the cathode composition for a lithium secondary battery includes a cathode active material including cathode active material particles, flake graphite and a conductive material.

In some embodiments, the cathode active material particles may be represented by Formula 1 below.

$$[\text{Formula 1}] \qquad Li_aNi_xM_{1-x}O_{2+y}$$

In Formula 1, a, x and y may be in a range of $0.9 \le a \le 12$, $0.5 \le x \le 0.99$, and $-0.1 \le y \le 0.1$, respectively, and M may denote at least one element selected from Na, Mg, Ca, Y, Ti, Hf, V, Nb, Ta, Cr, Mo, W, Mn, Co, Fe, Cu, Ag, Zn, B, Al, Ga, C, Si, Sn, Ba or Zr.

In some preferred embodiments, a molar ratio or concentration x of Ni in Formula 1 may be 0.8 or more, and preferably is greater than 0.8.

For example, in some embodiments x may be in a range of $0.8 \le x \le 0.95$. Within the above range, high-capacity and high-output properties of the lithium secondary battery may be implemented.

Ni may be provided as a transition metal associated with output and capacity of the lithium secondary battery. Therefore, as described above, by employing the composition of high-nickel (high-Ni) contents in the cathode active material particles, it is possible to provide a high-power cathode and a high-power lithium secondary battery.

In this regard, as the content of Ni is increased, long-term storage stability and life-span stability of the cathode or secondary battery may be relatively reduced. However, according to exemplary embodiments, by including Co, the life-span stability and capacity retention properties may be improved through Mn while maintaining electrical conductivity.

For example, the cathode active material may include cathode active material particles having a secondary particle form formed by close-packing primary particles. Thereby, output properties at a cathode may be improved. However, in the form of secondary particles, for example, micro-cracks may be formed inside the secondary particles during charging and discharging of the battery, and a side reaction between an electrolyte and the cathode active material may be facilitated to generate gas inside the battery. Accordingly, when using the cathode active material particles having a secondary particle form alone as the cathode active material, the life-span properties of the secondary battery due to repeated charging and discharging may be reduced.

According to exemplary embodiments of the present invention, the cathode active material includes cathode active material particles in the form of single particles. Accordingly, cracks of the active material may be reduced and a BET (Brunauer, Emmett and Teller) specific surface area reacting with the electrolyte may be reduced due to the durable single particles. Accordingly, the life-span properties of the secondary battery and the capacity retention rate during repeated charging and discharging may be improved.

As used herein, the term "single particle shape" is used to mean, for example, excluding secondary particles formed by aggregating a plurality of primary particles. For example, the 'cathode active material particles having a single particle shape' are substantially composed of particles in the form of single particles, and may exclude a secondary particle structure in which a plurality (e.g., greater than 10, 20 or more, 30 or more, 40 or more, or 50 or more, etc.) of primary particles are assembled or aggregated.

As used herein, the term "single particle shape" does not exclude a monolithic structure formed by attaching or closely contacting single particles in a range of 2 to 10, for example.

For example, the cathode active material may include cathode active material particles having a granular or spherical single particle shape.

For example, by using the above-described cathode active material particles having a secondary particle form and cathode active material particles having a single particle shape together as a cathode active material, output properties may be enhanced, and life-span properties and stability at high temperature of the secondary battery may be improved.

In some embodiments, a content of the cathode active material particles having a single particle shape may be 10% by weight ("wt.%") to 50 wt.%, and preferably 20 wt.% to 30 wt.%, based on a total weight of the cathode active material. Within the above range, life-span properties and high-temperature stability of the secondary battery may be improved while securing sufficient output properties and capacity properties.

For example, the cathode active material particles having a single particle shape may have higher strength than that of the cathode active material particles having a secondary particle form. Thereby, at the time of a press process during formation of the cathode or repeated charging and discharging of the secondary battery, the cathode active material particles in the form of single particles may damage the cathode active material particles in the form of secondary particles. Accordingly, cracks may occur in the cathode active material particles in the form of secondary particles, thus high-temperature storage performance and cycle properties of the secondary battery may be reduced.

In addition, the cathode active material particles having a single particle shape have high strength, such that it may not be easy to implement a high-density electrode through pressing. For example, when increasing the press pressure to implement a high-density electrode, cracks may occur in the cathode active material particles in the form of secondary particles.

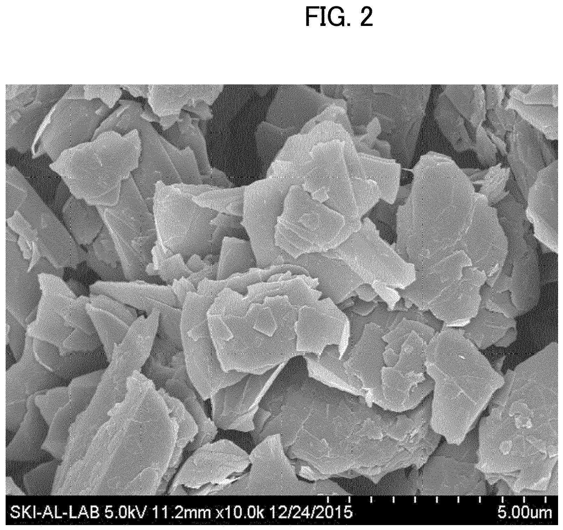

FIG. 2 is an SEM image illustrating flake graphite included in the cathode composition according to exemplary embodiments.

Referring to FIGS. 1 and 2, the cathode composition according to exemplary embodiments of the present invention includes flaky (flake type) graphite in addition to the above-described cathode active material particles. Thereby, flake graphite may be disposed around the cathode active material particles to relieve external pressure and stress applied to the cathode active material particles. Accordingly, mechanical stability of the cathode active material may be enhanced, and high-temperature storage properties and life-span properties may be improved.

For example, the flake type may refer to a form having a ratio of width to height (i.e., an aspect ratio) of 0.5 to 0.8. Within the above aspect ratio range, external pressure applied to the cathode active material particles may be sufficiently buffered.

For example, the ratio of width to height (i.e., the aspect ratio) may refer to a value obtained by dividing a minor axis length of a flake graphite particle by a major axis length.

In some embodiments, the flake graphite may have a crystalline structure.

In some embodiments, the flake graphite may have an average particle diameter (D50) of 1 $\mu$m to 5 $\mu$m. Within the above range, high energy density may be implemented while sufficiently surrounding the cathode active material particles by the flake graphite to relieve external pressure/impact. Accordingly, energy density, high-temperature storage properties and life-span properties of the secondary battery may be enhanced.

As used herein, the term "average particle diameter," "D50" and/or "average particle diameter (D50)" may refer to a particle diameter when a volume accumulation percentage in the particle size distribution obtained from the particle volume corresponds to 50%.

In some embodiments, the flake graphite may have a thickness of 0.1 $\mu$m to 1.5 $\mu$m. Within the above range, high energy density may be implemented by the flake graphite while maintaining appropriate strength. Accordingly, energy density, high-temperature storage properties and life-span properties of the secondary battery may be enhanced.

In some embodiments, a content of the flake graphite may be 1 wt.% to 5 wt.% based on the total weight of the cathode composition. Within the above range, the external pressure applied to the cathode active material particles may be adequately relieved by the flake graphite while sufficiently including the cathode active material in the cathode composition. Accordingly, energy density, high-temperature storage properties and life-span properties of the secondary battery may be improved.

In some embodiments, a peak intensity ratio of flake graphite of Raman spectrum, which is defined by Equation 1 below, may be 0.1 to 0.35.

[Equation 1]

$$\text{Peak intensity ratio of Raman spectrum} = I_D/I_G$$

In Equation 1, $I_D$ may be a peak intensity of the flake graphite in a wavenumber range of 1,335 cm$^{-1}$ to 1,365 cm$^{-1}$ of Raman spectrum (e.g., D band of Raman spectrum), and $I_G$ may be a peak intensity of the flake graphite in a wavenumber range of 1,565 cm$^{-1}$ to 1,600 cm$^{-1}$ of Raman spectrum (e.g., G band of Raman spectrum).

Preferably, the peak intensity ratio of Raman spectrum may be 0.2 to 0.3. Within the above peak intensity ratio range, stability of the battery may be improved by the flake graphite while having sufficient crystalline properties. In addition, it is possible to prevent excessive reduction in crystallinity due to pulverization for controlling the particle diameter of flake graphite.

For example, the peak intensity ratio may represent a degree of amorphousness of flake graphite. For example, flake graphite may have an amorphous structure as the peak intensity ratio is increased, and may have a crystalline structure as the peak intensity ratio is decreased.

For example, within the above-described peak strength ratio range, an excessive increase in process costs may be suppressed while preventing a decrease in lubricating effect due to excessive amorphization of flake graphite.

Accordingly, resistance of the secondary battery may be reduced to improve the stability.

In exemplary embodiments, the cathode composition may include a conductive material including a carbon-based conductive material separately from the above-described flake graphite. The carbon-based conductive material may have, for example, an amorphous structure.

For example, the conductive material may be included to facilitate electron movement between active material particles. Accordingly, by including the cathode active material particles in the form of single particles, resistance of the cathode active material having a reduced BET specific surface area may be reduced and output properties may be enhanced.

For example, the carbon-based conductive material may include at least one selected from the group consisting of amorphous graphite, carbon black, graphene, carbon nanotube (CNT), and carbon fiber (such as carbon nanofiber, CNF).

For example, mechanical reinforcement of the cathode active material may be implemented by planar (e.g., graphene) and linear (e.g., CNT and CNF) conductive materials included in the carbon-based conductive material. Accordingly, an occurrence of cracks in the electrode due to volume expansion of the active material may be suppressed, and mechanical stability and life-span properties of the secondary battery may be enhanced.

According to one embodiment, the carbon-based conductive material may have an amorphous structure. Accordingly, mechanical stability of the secondary battery may be further improved.

In some embodiments, the conductive material may further include a metal-based conductive material.

For example, the metal-based conductive material may include tin, tin oxide, titanium oxide, or a perovskite material such as $LaSrCoO_3$, and $LaSrMnO_3$.

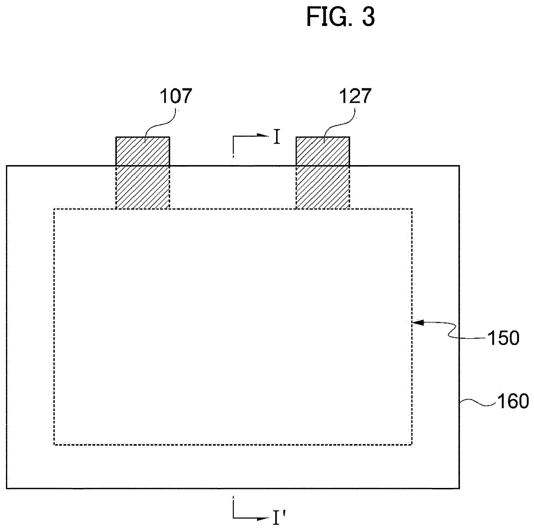

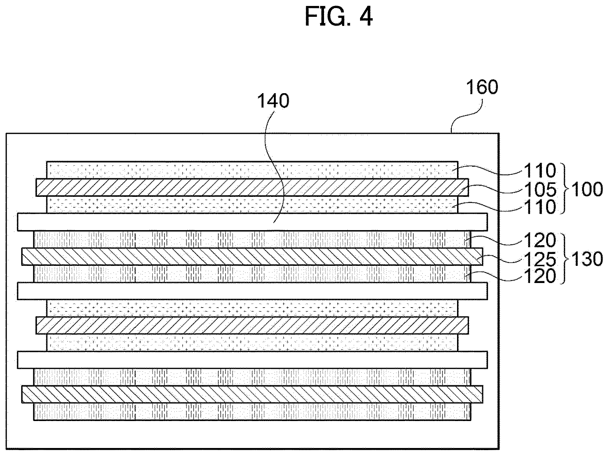

FIGS. 3 and 4 are a schematic plan view and a cross-sectional view of a lithium secondary battery according to exemplary embodiments, respectively.

Hereinafter, description of a lithium secondary battery including a cathode formed using the above-described cathode composition for a lithium secondary battery will be provided with reference to FIGS. 3 and 4.

Referring to FIGS. 3 and 4, the lithium secondary battery may include a cathode 100 formed using the above-described cathode composition, and an anode 130 disposed to face the cathode 100.

The cathode 100 may include a cathode active material layer 110 formed by applying a cathode composition including the above-described cathode active material particles in the form of single particles, flake graphite and an amorphous carbon-based conductive material to at least one surface of a cathode current collector 105.

For example, the cathode current collector may include stainless steel, nickel, aluminum, titanium, copper, or an alloy thereof, and preferably includes aluminum or an aluminum alloy.

For example, a cathode composition may be prepared in a slurry form by mixing and stirring cathode active material particles in the form of single particles, cathode active material particles in the form of secondary particles, and flake graphite with a conductive material including the above-described amorphous carbon-based conductive material, a binder and a dispersant in a solvent. The cathode composition in the slurry form may be applied to the cathode current collector 105, followed by drying and pressing the same to prepare the cathode.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of a binder for forming the cathode active material layer 110 may be reduced and an amount of the cathode active material may be relatively increased, thereby improving the output and capacity of the secondary battery.

The anode 130 may include an anode current collector 125, and an anode active material layer 120 formed by coating the anode current collector 125 with an anode active material.

For example, the anode active material useable herein may include a material capable of intercalating and deintercalating lithium ions. For example, the anode active material may include a carbon-based material such as crystalline carbon, amorphous carbon, carbon composite, or carbon fiber; lithium alloy; silicon or tin, etc.

The amorphous carbon may include, for example, hard carbon, cokes, mesocarbon microbead (MCMB) calcined at 1,500 °C or lower, mesophase pitch-based carbon fiber (MPCF) or the like.

Examples of the crystalline carbon may include graphite-based carbon such as natural graphite, graphite cokes, graphite MCMB, and graphite MPCF or the like. Examples of elements included in the lithium alloy may include aluminum, zinc, bismuth, cadmium, antimony, silicon, lead, tin, gallium, indium or the like.

The anode current collector 125 may include, for example, gold, stainless steel, nickel, aluminum, titanium, copper, or an alloy thereof, and preferably includes copper or a copper alloy.

In some embodiments, a slurry may be prepared by mixing and stirring the anode active material with a binder, a conductive material and/or a dispersant in a solvent. The slurry may be applied to the anode current collector 125, followed by compressing and drying to prepare the anode 130.

As the binder and the conductive material, materials which are substantially the same as or similar to the above-described materials may be used. In some embodiments, a binder for forming the anode may include, for example, an aqueous binder such as styrene-butadiene rubber (SBR) for consistency with the carbon-based active material, and may be used together with a thickener such as carboxymethyl cellulose (CMC).

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

According to exemplary embodiments, an electrode cell is defined by the cathode 100, the anode 130, and the separation membrane 140, and a plurality of electrode cells are laminated to form, for example, a jelly roll type electrode assembly 150. For example, the electrode assembly 150 may be formed by winding, lamination, folding, or the like of the separation membrane 140.

The electrode assembly may be housed in an outer case 160 together with an electrolyte to define the lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion $(X^-)$ of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, $\gamma$-butyrolactone, propylene sulfite, tetrahydrofurane, and the like may be used. These compounds may be used alone or in combination of two or more thereof.

As illustrated in FIG. 3, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) extending or exposed to an outside of the outer case 160.

The lithium secondary battery may be manufactured, for example, in a cylindrical shape using a can, a square shape, a pouch type or a coin shape.

Hereinafter, specific experimental examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

**Example 1**

(1) <u>Preparation of cathode active material particles having single particle shape</u> $NiSO_4$, $CoSO_4$ and $MnSO_4$ were mixed in a molar ratio of 0.83:0.13:0.04, respectively, by using distilled water from which internal dissolved oxygen was removed by bubbling with $N_2$ for 24 hours. The mixed solution was introduced into a reactor at 50 °C, and NaOH as a precipitant and $NH_3H_2O$ as a chelating agent were added thereto, followed by performing co-precipitation for 72 hours to obtain $Ni_{0.83}Co_{0.13}Mn_{0.04}(OH)_2$ as a transition metal precursor. The obtained precursor was dried at 100 °C for 12 hours, and then again dried at 120 °C for 10 hours.

$Li_2CO_3$ as a transition metal precursor and LiOH as a lithium source were mixed for about 20 minutes while pulverizing. The mixed powder was calcined at 700 °C to 1,000 °C for 15 hours, and then pulverization, sieving and de-ironization processes were performed to prepare cathode active material particles having a composition of $LiNi_{0.83}Co_{0.13}Mn_{0.04}O_2$ and a single particle shape (average particle diameter (D50): 5.6 $\mu$m).

(2) <u>Preparation of cathode active material particles having secondary particle form</u>

$NiSO_4$, $CoSO_4$ and $MnSO_4$ were mixed in a molar ratio of 0.88:0.06:0.06, respectively, by using distilled water from which internal dissolved oxygen was removed by bubbling with $N_2$ for 24 hours. The mixed solution was introduced into a reactor at 50 °C, and NaOH as a precipitant and $NH_3H_2O$ as a chelating agent were added thereto, followed by performing co-precipitation for 72 hours to obtain $Ni_{0.88}Co_{0.06}Mn_{0.06}(OH)_2$ as a transition metal precursor. The obtained precursor was dried at 100 °C for 12 hours, and then again dried at 120 °C for 10 hours.

Lithium hydroxide and the transition metal precursor were added to a dry high-speed mixer in a ratio of 1.03:1, and was uniformly mixed for 20 minutes. The mixture was put into a calcination furnace, and heated to 950 °C at a heating rate of 2 °C/min, then maintained at 950 °C for 12 hours. Oxygen was continuously passed through at a flow rate of 10 mL/min during heating and maintenance. After completion of the calcination, the mixture was naturally cooled to room temperature, followed by pulverization and classification to prepare cathode active material particles having a composition of $LiNi_{0.88}Co_{0.06}Mn_{0.06}O_2$ and a secondary particle form.

### (3) Preparation of cathode

A cathode active material was mixed so that a content of the cathode active material particles having a single particle shape was 20 wt.% based on the total weight of the prepared cathode active material particles (including single particle and secondary particle forms).

The cathode active material, flake graphite, graphene having an amorphous form as a carbon-based conductive material, and PVDF as a binder were mixed in a mass ratio composition of 94:3:1.5:1.5, respectively, to prepare a cathode composition.

The cathode composition was applied to an aluminum current collector (thickness: 15 $\mu$m), followed by drying and pressing to form a cathode active material layer. Thereby, a cathode, in which a cathode active material layer was formed on the cathode current collector, was prepared.

As the flake graphite, flake graphite having an average particle diameter of 3 $\mu$m and a thickness of 0.5 $\mu$m was used.

### (4) Manufacture of lithium secondary battery

An anode slurry, which includes 88 wt.% of natural graphite as an anode active material, 5 wt.% of SiOx (0≤x≤2), 4 wt.% of KS6, which is a flake type conductive material, as a conductive material, 1.7 wt.% of styrene-butadiene rubber (SBR) as a binder and 1.3 wt.% of carboxymethyl cellulose (CMC) as a thickener, was prepared. The anode slurry was applied to a copper substrate, followed by drying and pressing to prepare an anode.

The cathode and the anode prepared as described above were respectively notched in a predetermined size and laminated, then an electrode cell was fabricated by interposing a separator (polyethylene, thickness: 15 $\mu$m) between the cathode and the anode. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more, to manufacture a lithium secondary battery.

The electrolyte used herein was prepared by dissolving 1M $LiPF_6$ solution in a mixed solvent of EC/EMC/DEC (25/45/30; volume ratio), and adding 1 wt.% of vinylene carbonate (VC), 0.5 wt.% of 1,3-propene sultone (PRS), and 0.5 wt.% of lithium bis(oxalato)borate (LiBOB) thereto.

### Examples 2 to 5

Cathodes and lithium secondary batteries were manufactured according to the same procedures as described in Example 1, except that the content of the cathode active material particles having a single particle shape was adjusted as shown in Table 1 below, respectively.

### Examples 6 to 9

Cathodes and lithium secondary batteries were manufactured according to the same procedures as described in Example 1, except that flake graphite having an average particle diameter and thickness shown in Table 1 was used, respectively.

### Examples 10 and 11

Cathodes and lithium secondary batteries were manufactured according to the same procedures as described in Example 1, except that the content of flake graphite was adjusted as shown in Table 1 below, respectively.

### Example 12

A cathode and a lithium secondary battery were manufactured according to the same procedures as described in Example 1, except that the mass ratio of the cathode active material, flake graphite, graphene having an amorphous graphene and PVDF in the cathode composition was adjusted to 94:5:0.5:0.5.

### Example 13

A cathode and a lithium secondary battery were manufactured according to the same procedures as described in Example 1, except that flake graphite having an average particle diameter of 1.5 μm and a thickness of 1 μm was used.

### Comparative Example 1

A cathode and a lithium secondary battery were manufactured according to the same procedures as described in Example 1, except that cathode active material particles having a secondary particle form were used alone as a cathode active material, and a cathode composition was prepared so that the mass ratio of the cathode active material, graphene and PVDF was 94:3:3 (flake graphite was not included).

### Comparative Example 2

A cathode and a lithium secondary battery were manufactured according to the same procedures as described in Example 1, except that the cathode composition was prepared so that the mass ratio of the cathode active material, graphene and PVDF was 94:3:3 (flake graphite was not included).

### Comparative Example 3

A cathode and a lithium secondary battery were manufactured according to the same procedures as described in Example 1, except that cathode active material particles having a secondary particle form were used alone as the cathode active material.

### Experimental example

(1) Measurement of peak intensity ratio of Raman spectrum

The cathodes prepared according to the above-described examples and comparative examples were made into samples, and Raman spectrum of flake graphite was measured on the sample using a 532 nm laser Raman spectroscopy, respectively. In the obtained Raman spectrum, a peak intensity ($I_D$) of flake graphite in a band with a wavenumber of 1,335 to 1,365 cm$^{-1}$ (e.g., D band) and a peak intensity ($I_G$) of flake graphite in a band with a wavenumber of 1,565 to 1,600 cm$^{-1}$ (e.g., G band) were measured. The measured peak intensities were applied to Equation 1 to calculate the peak intensity ratio of Raman spectrum. Calculation results are shown in Table 1 below.

(2) Measurement of energy density

After repeatedly charging (CC-CV 0.33C 4.2 V 0.05C SOC100 CUT-OFF) and discharging (CC 0.5C 2.5 V SOC 0 CUT-OFF) the lithium secondary batteries manufactured according to the above-described examples and comparative examples 2 times in a chamber at 25 °C, an energy density (Wh/L) was measured by multiplying the discharge capacity at 2 times by an average discharge voltage and then dividing it by an area, respectively. Measurement results are shown in Table 2 below.

(3) Measurement of cycle capacity retention rate

After repeatedly charging (CC-CV 0.33C 4.2 V 0.05C SOC96 CUT-OFF) and discharging (CC 0.5C 2.8 V SOC2 CUT-OFF) the lithium secondary batteries manufactured according to the above-described examples and comparative examples 500 times in a chamber at 45 °C, a capacity retention rate after 500 cycles was calculated by calculating the discharge capacity at 500 times as a percentage (%) based on the discharge capacity at one time, respectively. Calculation results are shown in Table 2 below.

(4) Measurement of storage capacity retention rate

The lithium secondary batteries manufactured according to the above-described examples and comparative examples were stored in a chamber at 60 °C. A storage capacity retention rate was calculated by calculating the discharge capacity after 20 weeks from storage as a percentage (%) based on the initial discharge capacity. Calculation results are shown in Table 2 below.

[Table 1]

| Division | Content of cathode active material particles having single particle shape (wt.%) | Flake graphite | | | Peak intensity ratio of Raman spectrum ($I_D/I_G$) |
| --- | --- | --- | --- | --- | --- |
| | | Particle diameter ($\mu$m) | Thickness ($\mu$m) | Content (wt.%) | |
| Example 1 | 20 | 3 | 0.5 | 3 | 0.29 |
| Example 2 | 30 | 3 | 0.5 | 3 | 0.32 |
| Example 3 | 40 | 3 | 0.5 | 3 | 0.24 |
| Example 4 | 8 | 3 | 0.5 | 3 | 0.22 |
| Example 5 | 55 | 3 | 0.5 | 3 | 0.25 |
| Example 6 | 20 | 0.7 | 0.5 | 3 | 0.18 |
| Example 7 | 20 | 5.5 | 0.5 | 3 | 0.31 |
| Example 8 | 20 | 3 | 0.08 | 3 | 0.13 |
| Example 9 | 20 | 3 | 1.55 | 3 | 0.26 |
| Example 10 | 20 | 3 | 0.5 | 0.8 | 0.22 |
| Example 11 | 20 | 3 | 0.5 | 5.2 | 0.34 |
| Example 12 | 20 | 3 | 0.5 | 5 | 0.08 |
| Example 13 | 20 | 1.5 | 1 | 3 | 0.40 |
| Comparative Example 1 | - | - | - | - | - |
| Comparative Example 2 | 20 | - | - | - | - |
| Comparative Example 3 | - | 3 | 0.5 | 3 | 0.36 |

[Table 2]

| Division | Energy density (wh/l) | Cycle capacity retention rate (at 45 °C, 500 cycles) (%) | Storage capacity retention rate (at 60 °C) (%) |
| --- | --- | --- | --- |
| Example 1 | 720 | 92.2 | 95.1 |
| Example 2 | 717 | 93.4 | 95.4 |
| Example 3 | 715 | 94.3 | 96.0 |
| Example 4 | 724 | 89.8 | 93.5 |
| Example 5 | 709 | 95.5 | 96.6 |
| Example 6 | 715 | 90.2 | 93.8 |
| Example 7 | 705 | 92.1 | 95.2 |
| Example 8 | 718 | 90.4 | 94.0 |
| Example 9 | 706 | 92.0 | 94.9 |
| Example 10 | 723 | 89.5 | 93.3 |
| Example 11 | 707 | 94.0 | 96.2 |
| Example 12 | 710 | 90.9 | 94.1 |
| Example 13 | 717 | 91.0 | 92.4 |

(continued)

| Division | Energy density (wh/l) | Cycle capacity retention rate (at 45 °C, 500 cycles) (%) | Storage capacity retention rate (at 60 °C) (%) |
|---|---|---|---|
| Comparative Example 1 | 731 | 83.5 | 91.8 |
| Comparative Example 2 | 720 | 85.1 | 91.9 |
| Comparative Example 3 | 729 | 89.1 | 92.6 |

Referring to Tables 1 and 2 above, in the examples including cathode active material particles having a single particle shape and flake graphite in the cathode composition, cycle properties and high-temperature storage properties were improved compared to the comparative examples which do not include the single particles and/or flake graphite.

In Example 1, life properties were improved compared to Comparative Example 2 which has the same single particle content as Example 1 but does not include flake graphite.

In Example 4, the content of the cathode active material particles having a single particle shape was less than 10 wt.% based on the total weight of the cathode active material, such that the capacity retention rate was reduced compared to other examples.

In Example 5, the content of cathode active material particles having a single particle shape was greater 50 wt.% based on the total weight of the cathode active material, such that the energy density was reduced compared to other examples.

In Example 6, the flake graphite had an average particle diameter of less than 1 μm, such that an effect of protecting the cathode active material by the flake graphite from an external pressure was reduced compared to other examples.

In Example 7, the flake graphite had an average particle diameter of greater than 5 μm, such that the energy density was reduced compared to other examples.

In Example 8, the flake graphite had a thickness of less than 0.1 μm, such that the effect of protecting the cathode active material by the flake graphite from an external pressure was reduced compared to other examples.

In Example 9, the flake graphite had a thickness of greater than 1.5 μm, such that the energy density was reduced compared to other examples.

In Example 10, the content of flake graphite was less than 1 wt.% based on the total weight of the cathode composition, such that the effect of protecting the cathode active material by the flake graphite from an external pressure was reduced compared to other examples.

In Example 11, the content of flake graphite was greater than 5 wt.% based on the total weight of the cathode composition, such that the energy density was reduced compared to other examples.

In Example 13, the peak intensity ratio of flake graphite of Raman spectrum was greater than 0.35, such that relatively low crystallinity of graphite was shown. In this case, sliding performance of the graphite layer may be decreased during the electrode pressing process, and an occurrence of cracks in the cathode active material may be increased. Thereby, life-span properties and storage capacity retention rate of the secondary battery were reduced compared to other examples.

**Claims**

1. A cathode composition for a lithium secondary battery comprising:

   a cathode active material which comprises cathode active material particles having a single particle shape;
   flake graphite; and
   a conductive material including an amorphous carbon-based conductive material.

2. The cathode composition for a lithium secondary battery according to claim 1, wherein a content of the cathode active material particles having a single particle shape is 10 % by weight to 50 % by weight based on a total weight of the cathode active material.

3. The cathode composition for a lithium secondary battery according to claim 1 or claim 2, wherein the single particle shape includes a monolithic form in which 2 to 10 single particles are attached or adhered to each other.

4. The cathode composition for a lithium secondary battery according to any one of claims 1 to 3, wherein the cathode active material particles have a composition represented by Formula 1 below.

[Formula 1]     $Li_aNi_xM_{1-x}O_{2+y}$

wherein, in Formula 1, $0.9 \leq a \leq 1.2$, $0.5 \leq x \leq 0.99$, and $-0.1 \leq y \leq 0.1$, respectively, and M is at least one element selected from Na, Mg, Ca, Y, Ti, Hf, V, Nb, Ta, Cr, Mo, W, Mn, Co, Fe, Cu, Ag, Zn, B, Al, Ga, C, Si, Sn, Ba or Zr.

5. The cathode composition for a lithium secondary battery according to claim 4, wherein x is in a range of $0.8 \leq x \leq 0.95$ in Formula 1.

6. The cathode composition for a lithium secondary battery according to any one of claims 1 to 5, wherein the flake graphite has an average particle diameter (D50) of 1 $\mu$m to 5 $\mu$m.

7. The cathode composition for a lithium secondary battery according to any one of claims 1 to 6, wherein the flake graphite has a thickness of 0.1 $\mu$m to 1.5 $\mu$m.

8. The cathode composition for a lithium secondary battery according to any one of claims 1 to 7, wherein a content of the flake graphite is 1% by weight to 5% by weight based on a total weight of the cathode composition for a lithium secondary battery.

9. The cathode composition for a lithium secondary battery according to any one of claims 1 to 8, wherein a peak intensity ratio of the flake graphite of Raman spectrum, which is defined by Equation 1 below, is 0.1 to 0.35:

[Equation 1]

$$\text{Peak intensity ratio of Raman spectrum} = I_D/I_G$$

wherein, in Equation 1, $I_D$ is a peak intensity of the flake graphite in a wavenumber range of 1,335 cm$^{-1}$ to 1,365 cm$^{-1}$ of Raman spectrum, and $I_G$ is a peak intensity of the flake graphite in a wavenumber range of 1,565 cm$^{-1}$ to 1,600 cm$^{-1}$ of Raman spectrum.

10. The cathode composition for a lithium secondary battery according to claim 9, wherein the peak intensity ratio of Raman spectrum is 0.2 to 0.3.

11. The cathode composition for a lithium secondary battery according to any one of claims 1 to 10, wherein the flake graphite includes at least one of natural graphite, artificial graphite and graphene.

12. The cathode composition for a lithium secondary battery according to any one of claims 1 to 11, wherein the conductive material includes at least one selected from the group consisting of graphite, carbon black, graphene, carbon fiber and carbon nanotube.

13. The cathode composition for a lithium secondary battery according to any one of claims 1 to 12, wherein the conductive material further includes a metal-based conductive material.

14. The cathode composition for a lithium secondary battery according to claim 13, wherein the metal-based conductive material includes at least one selected from the group consisting of tin, tin oxide, titanium oxide, $LaSrCoO_3$ and $LaSrMnO_3$.

15. A lithium secondary battery comprising:

a cathode which comprises a cathode current collector, the cathode formed by coating at least one surface of the cathode current collector with the cathode composition for a lithium secondary battery according to any one of claims 1 to 14; and
an anode disposed to face the cathode.

# FIG. 1

FIG. 2

SKI-AL-LAB 5.0kV 11.2mm x10.0k 12/24/2015    5.00um

# FIG. 3

# FIG. 4

Europäisches
Patentamt

European
Patent Office

Office européen
des brevets

# EUROPEAN SEARCH REPORT

Application Number

**EP 23 16 2747**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/104531 A1 (TANINO KAZUYUKI [JP] ET AL) 23 April 2009 (2009-04-23) | 1,2, 4-12,15 | INV. H01M10/052 |
| Y | * paragraphs [0007], [0008], [0012], [0013]; claim 1 * | 3,13,14 | H01M10/056 H01M4/04 H01M4/1391 |
| Y | US 2019/020024 A1 (WANG LIJUAN [CN] ET AL) 17 January 2019 (2019-01-17) * paragraph [0009] * | 3 | H01M4/131 H01M4/505 H01M4/52 H01M4/62 |
| Y | KR 2019 0051252 A (SK INNOVATION CO LTD [KR]) 15 May 2019 (2019-05-15) * paragraph [0038] * | 13,14 | ADD. H01M4/02 |

TECHNICAL FIELDS SEARCHED (IPC)

H01M

The present search report has been drawn up for all claims

| Place of search | Date of completion of the search | Examiner |
|---|---|---|
| Munich | 17 August 2023 | Meini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 16 2747**

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2023

| Patent document cited in search report | | | Publication date | Patent family member(s) | | | Publication date |
|---|---|---|---|---|---|---|---|
| US 2009104531 | A1 | | 23-04-2009 | CN | 101427403 | A | 06-05-2009 |
| | | | | EP | 2026389 | A1 | 18-02-2009 |
| | | | | KR | 20090005186 | A | 12-01-2009 |
| | | | | TW | 200803018 | A | 01-01-2008 |
| | | | | US | 2009104531 | A1 | 23-04-2009 |
| | | | | WO | 2007123246 | A1 | 01-11-2007 |
| US 2019020024 | A1 | | 17-01-2019 | CN | 107437616 | A | 05-12-2017 |
| | | | | EP | 3428125 | A1 | 16-01-2019 |
| | | | | JP | 6850949 | B2 | 31-03-2021 |
| | | | | JP | 2019021627 | A | 07-02-2019 |
| | | | | KR | 20190006906 | A | 21-01-2019 |
| | | | | US | 2019020024 | A1 | 17-01-2019 |
| KR 20190051252 | A | | 15-05-2019 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170093085